# EUROPÄISCHE PATENTSCHRIFT

(11) **EP 0 657 681 B1**
(45) Veröffentlichungstag und Bekanntmachung des Hinweises auf die Patenterteilung: **02.06.1999**
(21) Anmeldenummer: 94114489.1
(22) Anmeldetag: 15.09.1994
(51) Int. Cl.: F16L 41/00

(54) **Verteilervorrichtung**
Distributor device
Dispositif de distribution

(30) Priorität: 27.11.1993 DE 9318183 U
(43) Veröffentlichungstag der Anmeldung: 14.06.1995
(73) Patentinhaber: FESTO AG & Co, 73734 Esslingen (DE)
(72) Erfinder: Stoll, Kurt, Dr., D-73732 Esslingen (DE)
(74) Vertreter: Abel, Martin, Dipl.-Ing.

(56) Entgegenhaltungen:
- DE-A- 2 430 439
- DE-C- 3 346 111
- DE-C- 3 509 157
- US-A- 2 798 506
- US-A- 3 268 174
- US-A- 4 072 355

## Beschreibung

Die Erfindung betrifft eine Verteilervorrichtung für Druckluft und/oder sonstige, insbesondere gasförmige Medien, mit einem stirnseitig durch Gehäusedeckel verschlossenen, einen Längsschlitz aufweisenden Verteilergehäuse, in dem sich ein das zu verteilende Medium bereitstellender Verteilerraum befindet, mit zwei zur Abdichtung des Verteilerraumes im Bereich des Längsschlitzes dienenden, sich entlang des Längsschlitzes erstreckenden Dichtleisten, die sich gegenüberliegend jeweils im Bereich eines der beiden Schlitzränder angeordnet sind und auf deren Rückseite jeweils ein zusätzlich zum Verteilerraum vorgesehener, sich längs der zugeordneten Dichtleiste erstreckender Druckraum angeordnet ist, wobei die Druckräume jeweils von einem von der zugeordneten Dichtleiste gebildeten oder diese Dichtleiste beaufschlagenden querbeweglichen Wandabschnitt begrenzt und aus dem Verteilerraum über mit diesem kommunizierende Verbindungskanäle mit fluidischem Druckmittel versorgt werden, so daß die Dichtleisten durch Druckbeaufschlagung gegeneinandergedrückt werden, und mit einem längs des Längsschlitzes bewegbaren Abgreifteil, das mit einem zur Übertragung des Mediums dienenden Spreizkörper zwischen die beiden Dichtleisten hineingreift, die dabei lokal auseinandergespreizt werden.

Aus der DE-A-33 46 111 geht eine Verteilervorrichtung für Druckluft hervor, die ein langgestrecktes Verteilergehäuse aufweist, in dem sich der mit Druckluft befüllbare Verteilerraum befindet. Der zu diesem Verteilerraum hin offene gehäuseseitige Längsschlitz ist mittels zweier lippenartig geformter Dichtleisten abgedichtet. Der Spreizkörper des Abgreifteils hat einen schiffchenähnlichen Querschnitt und ist zwischen den Dichtleisten hindurchgeführt. Durch Verändern der Axiallage des Abgreifteils läßt sich die Abgreifstelle verlagern, um je nach Bedarf an unterschiedlichen Stellen Druckluft zur Verfügung zu haben.

Wird das Abgreifteil nach einer längeren Zeit des Stillstandes verlagert, so kann es geschehen, daß die Dichtleisten im Bereich der zuvor eingenommenen Position des Spreizkörpers aufgrund einer vorübergehenden plastischen Verformung nicht sofort vollständig schließen. Es kann daher vorübergehend ein Luftverlust auftreten, der sich unter Umständen auch nachteilig auf das Druckniveau im Verteilerraum auswirken kann.

Eine Verteilervorrichtung der eingangs genannten Art mit ähnlichem Aufbau geht aus der US-A-2 798 506 hervor, wobei zur Verbesserung der Abdichtwirkung die Dichtleisten als Bestandteile von Schlauchkörpern ausgebildet sind, die ein unter Druck stehendes Medium enthalten. Dieses Medium wird über die Wandung der Schlauchkörper durchsetzende Verbindungskanäle aus dem Verteilerraum entnommen.

Es ist die Aufgabe der vorliegenden Erfindung, eine Verteilervorrichtung der eingangs genannten Art zu schaffen, bei der der Verteilerraum im Schlitzbereich unabhängig von der Zeitdauer der Beibehaltung einzelner Stellungen des Abgreifteils zuverlässig abgedichtet wird.

Diese Aufgabe wird dadurch gelöst, daß die Verbindungskanäle in mindestens einem der stirnseitigen Gehäusedeckel des Verteilergehäuses vorgesehen sind und einerseits stirnseitig in den Verteilerraum und andererseits stirnseitig in jeweils einen der Druckräume münden.

Der in den Druckräumen vorherrschende Druck sorgt dafür, daß die Dichtleisten in den neben dem Spreizkörper angeordneten Bereichen fest gegeneinander gepreßt werden und sich auch dann mit Dichtkontakt fest aneinander anschmiegen, wenn das Abgreifteil zuvor längere Zeit an ein und derselben Stelle verblieben war. Eventuelle Tendenzen zu bleibender Verformung der Dichtleisten werden durch das die Dichtleisten rückseitig beaufschlagende Druckmittel unterbunden oder ausgeglichen. Die Zufuhr des Druckmittels in die Druckräume erfolgt stirnseitig über in wenigstens einem der Gehäusedeckel verlaufende Verbindungskanäle. Bei dem in den Druckräumen befindlichen fluidischen Druckmittel handelt es sich insbesondere um Druckluft. Besagtes Druckmittel kann von einer beliebigen Druckmittelquelle stammen und wird aus dem Verteilerraum abgezapft, wozu geeignete gehäuseseitige Verbindungskanäle vorgesehen sind.

Vorteilhafte Weiterbildungen der Erfindung sind in den Unteransprüchen aufgeführt.

Bei einer bevorzugten Ausführungsform ist eine jeweilige Dichtleiste von einem Wandabschnitt eines Schlauchkörpers gebildet, der durch das fluidische Druckmittel praktisch aufblasbar ist, so daß die Dichtleisten stets gegeneinander gedrückt werden. Eine derartige Ausgestaltung ist konstruktiv relativ einfach und läßt sich problemlos abdichten.

Nachfolgend wird die Erfindung anhand der beiliegenden Zeichnung näher erläutert. In dieser zeigen:
- Figur 1: eine erste Bauform der erfindungsgemäßen Verteilervorrichtung die zur Verteilung von Druckluft oder sonstiger gasförmiger Medien ausgelegt ist, in perspektivischer Darstellung,
- Figur 2: einen Längsschnitt durch die Verteilervorrichtung aus Figur 1 gemäß Schnittlinie II-II im Bereich des Abgreifteils,
- Figur 3: einen Querschnitt durch die Verteilervorrichtung aus Figur 1 gemäß Schnittlinie III-III,
- Figur 4: einen Querschnitt durch die Verteilervorrichtung aus Figur 1 gemäß Schnittlinie IV-IV, und
- Figur 5: ein Detail einer weiteren Ausführungsform der Verteilervorrichtung, wobei die Druckraumanordnung modifiziert ist.

Die beispielsgemäße Verteilervorrichtung verfügt über ein rohrähnliches langgestrecktes Verteilergehäuse 1, das an einer Stelle seines Umfanges einen radial und axial durchgehenden Längsschlitz 2 aufweist. Der Längsschlitz 2 mündet längsseits radial außen zur Umgebung und radial innen in den Hohlraum des Verteilergehäuses 1, der einen Verteilerraum 3 bildet. In dem Verteilerraum 3 befindet sich das zu verteilende Medium, bei dem es sich beispielsgemäß um Druckluft oder um ein sonstiges gasförmiges Medium handelt. Auch andere Fluidmedien könnten mit der Verteilervorrichtung verteilt werden, selbst eine Verteilung von elektrischer Energie wäre möglich.

Der Verteilerraum 3 ist ringsum dicht abgeschlossen. Zu diesem Zweck sind an den Stirnseiten des Verteilergehäuses 1 Gehäusedeckel 4, 5 angebracht und im Bereich des Längsschlitzes 2 ist eine sich über die gesamte Schlitzlänge erstreckende flexible Dichtungsanordnung 6 vorgesehen und gehäuseseitig festgelegt.

Die Dichtungsanordnung 6 umfaßt zwei Dichtleisten 7, 8, die jeweils im Bereich eines der beiden Schlitzränder des Längsschlitzes 2 angeordnet sind und normalerweise unter Dichtkontakt längsseits aneinander anliegen.

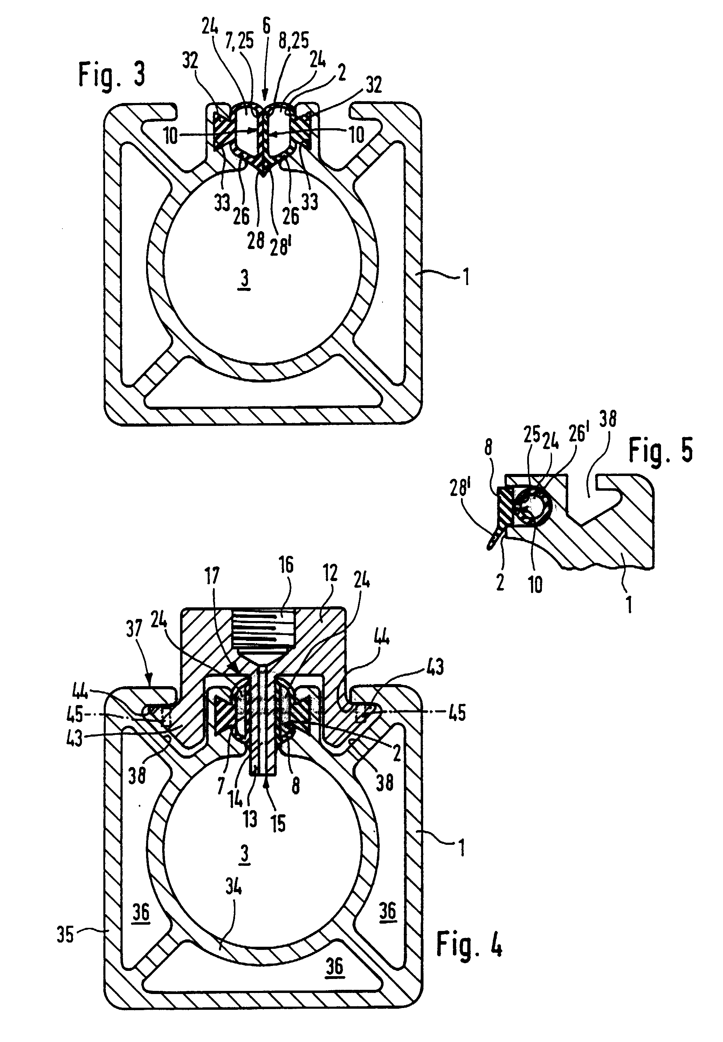

Ein außen an dem Verteilergehäuse 1 längsverschieblich gelagertes Abgreifteil 12 ragt mit einem Spreizkörper 13 zwischen den beiden Dichtleisten 7, 8 hindurch in den Verteilerraum 3 hinein. Der Spreizkörper 13 dient dazu, das im Verteilerraum 3 befindliche Medium abzuzapfen und nach außen zu führen. Zu diesem Zweck ist das Abgreifteil 12 mit mehreren oder wie abgebildet mit einem Übertragungskanal 14 ausgestattet, der einerseits (bei 15) an der in den Verteilerraum 3 hineinragenden Endpartie des Spreizkörpers 13 ausmündet und andererseits mit einer von außen her zugänglichen Anschlußöffnung 16 kommuniziert, an der eine weiterführende Druckmittelleitung, ein Druckmittelschlauch oder dergleichen anschließbar ist. Im Bereich des Spreizkörpers 13 kann der Übertragungskanal 14 im Querschnitt gesehen Flachgestalt mit einem rechteckähnlichen Profil aufweisen (Fig. 2).

Bei dem Spreizkörper 13 handelt es sich zweckmäßigerweise um ein längliches leistenähnlichen Teil, was aus Figur 2 besonders gut hervorgeht. An der Stelle, an der der Spreizkörper 13 zwischen die Dichtleisten 7, 8 greift - nachfolgend als Abgreifstelle 17 bezeichnet - werden die Dichtleisten 7, 8 auseinandergespreizt, was ein Vergleich der Figuren 3 und 4 deutlich macht. Der aufgespreizte Zustand ist aus Figur 4 zu ersehen. Aufgrund ihrer Flexibilität schmiegen sich die Dichtleisten 7, 8 an die seitliche Außenfläche des Spreizkörpers 13 an, so daß der Längsschlitz 2 auch im Bereich der Abgreifstelle 17 druckmitteldicht verschlossen ist. Die Dichtleisten 7, 8 bestehen zweckmäßigerweise aus Material mit gummielastischen Eigenschaften, insbesondere Gummi oder ein Elastomer.

Das Abgreifteil 12 läßt sich gemäß Doppelpfeil 18 entlang des Längsschlitzes 2 verlagern, wodurch sich die Position der Abgreifstelle 17 ändert, an der das fluidische Medium aus dem Verteilerraum 3 entnommen wird. Diese Verlagerung kann motorisch oder vorzugsweise manuell erfolgen. Da die Dichtleisten 7, 8 gegen den Spreizkörper 13 drücken, wird dieser in jeder Position reibschlüssig gehalten.

Die sich in Verlagerungsrichtung 18 an die beiden Stirnseiten 22 des Spreizkörpers 13 anschließenden Bereiche der Dichtungsanordnung 6 sind hinsichtlich der Abdichtung besonders problematisch, da dort der Aufspreizbereich beginnt. Daher ist der Spreizkörper 13 beim Ausführungsbeispiel zu den Stirnseiten 22 hin verjüngt gestaltet, wobei sich scharfe Abschlußkanten ergeben, die einen sanften Übergang der Dichtleisten 7, 8 zwischen dem unaufgespreizten und dem aufgespreizten Bereich gewährleisten. Bevorzugt hat der Spreizkörper 18 einen Grundriß ähnlich der Form eines länglichen Schiffchens, dessen in Schlitzquerrichtung gemessene Dicke ausgehend von den beiden Stirnseiten 22 zur Mitte hin allmählich zunimmt. Die Dichtleisten 7, 8 werden daher im längsmittigen Bereich des Spreizkörpers 13 stärker auseinandergespreizt als zu den Stirnseiten 22 hin. Die Stirnseitigen Abschlußkanten teilen beim Verlagern des Abgreifteils 12 die Dichtleisten 7, 8 messerartig, man könnte von einer reißverschlußähnlichen Funktionsweise sprechen.

Das zu verteilende fluidische Druckmittel wird dem Verteilerraum 3 beim Ausführungsbeispiel über eine Anschlußöffnung 23 zugeführt, die sich zweckmäßigerweise an einem der beiden Gehäusedeckel 5 befindet und über ein Gehäusekanal 21 mit dem Verteilerraum 3 kommuniziert. Die Anschlußöffnung 23 ermöglicht Beispielsweise das Anschließen einer von einer Druckmittelquelle kommenden Druckmittelleitung.

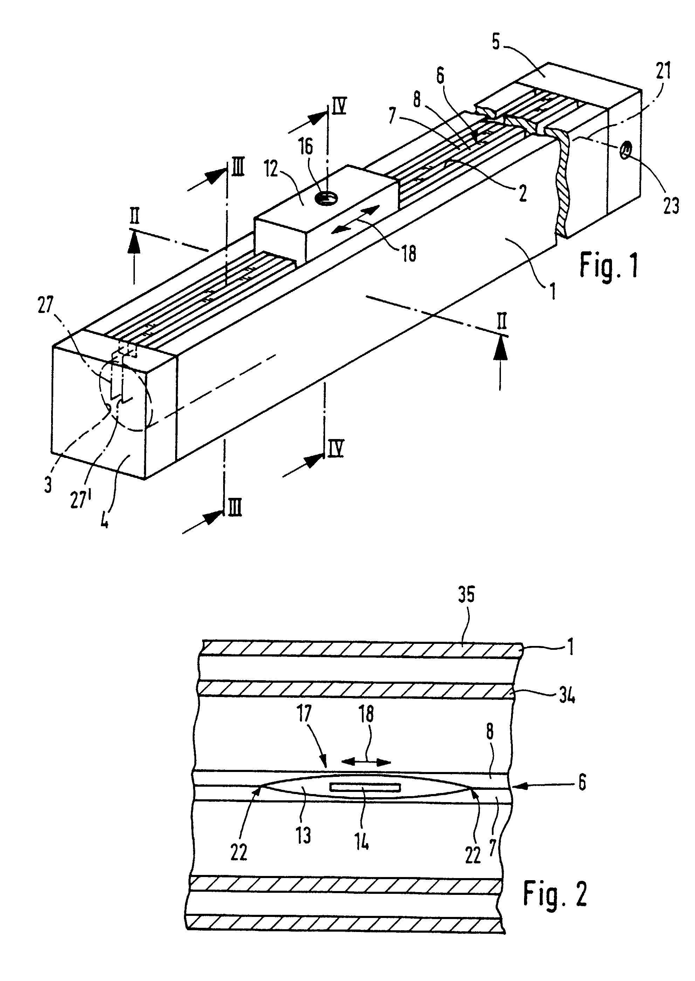

Um zu gewährleisten, daß der im auseinandergespreizten Bereich zwischen den Dichtleisten 7, 8 vorliegende Spalt nach einem Verlagern des Abgreifteils 12 sofort wieder fluiddicht geschlossen wird, ist auf der Rückseite 10 beider Dichtleisten 7, 8 jeweils ein bezüglich des Verteilerraumes 3 separater Druckraum 24 vorgesehen, der sich insbesondere durchgehend über die gesamte Länge der jeweils zugeordneten Dichtleiste 7, 8 erstreckt und mit fluidischem Druckmittel beaufschlagbar ist. Jeder Druckraum 24 besitzt einen quer zur Schlitzlängsrichtung beweglichen Wandabschnitt 25, der beim Ausführungsbeispiel gemäß Figuren 1 bis 4 von der zugeordneten Dichtleiste 7, 8 gebildet ist. Beim Ausführungsbeispiel gemäß Figur 5 ist der querbewegliche Wandabschnitt 25 separat von der jeweils zugeordneten Dichtleiste 7, 8 ausgebildet, jedoch so angeordnet, daß er letztere rückseitig beaufschlagt.

Das den Druckräumen 24 zugeführte Druckmittel sorgt dafür, daß die Dichtleisten 7, 8 stets mit gewissem Druck gegeneinander bzw. gegen die Seitenfläche des Spreizkörpers 13 angedrückt werden, so daß ständig ein guter Dichtkontakt vorliegt.

Sowohl beim Ausführungsbeispiel gemäß Figuren 1 bis 4 als auch beim Ausführungsbeispiel gemäß Figur 5 sind die beiden jeweils einer Dichtleiste 7, 8 zugeordneten Druckräume 24 in einem gehäusefest verankerten Schlauchkörper 26, 26' ausgebildet, der eine flexible Schlauchwand aufweist, die zweckmäßigerweise aus Material mit gummielastischen Eigenschaften besteht. Beim Ausführungsbeispiel gemäß Figuren 1 bis 4 ist eine jeweilige Dichtleiste 7, 8 integraler Bestandteil des zugeordneten Schlauchkörpers 26, stellt also einen Wandabschnitt dieses Schlauchkörpers 26 dar. Somit liegt jeweils nur ein einziges Bauteil vor, was eine sehr einfache Herstellung ermöglichst. Beim Ausführungsbeispiel gemäß Figur 5 ist der Schlauchkörper 26' separat von der jeweiligen Dichtleiste 7, 8 ausgebildet, die dem jeweils zugeordneten Schlauchkörper 26' vorgelagert ist. Wird der Schlauchkörper 26' unter Druck gesetzt, drückt der bewegliche Wandabschnitt 25 gegen die Rückseite 10 der zugeordneten Dichtleiste, wodurch diese widerum in Richtung zur gegenüberliegenden Dichtleiste gedrückt wird.

Die nicht mit einer Dichtleiste zusammenarbeitenden bzw. keine Dichtleiste bildenden Bereiche der Schlauchwand können zumindest größtenteils vom Verteilergehäuse 1 abgestützt sein, indem der Schlauchkörper 26' wie in Fig. 5 gezeigt, beispielsweise in einer Gehäusenut aufgenommen ist.

Der in den Druckräumen 24 herrschende Druck läßt sich vorzugsweise bedarfsgemäß einstellen. Auf diese Weise kann man der Größe der Dichtflächen der Dichtleisten 7, 8 Rechnung tragen und Einfluß auf die Anpreßkräfte zwischen den Dichtleisten 7, 8 und die für das Verlagern des Abgreifteils 12 erforderlichen Verstellkräfte nehmen. Bevorzugt werden die Druckräume 24 mit Druckluft beaufschlagt. Als Druckmittelquelle kann jede beliebige, zur Verfügung stehende Druckmittelquelle dienen, beispielsweise wäre ein Anschluß an die auch den Verteilerraum 3 versorgende Druckmittelquelle möglich. Hierzu können außen am Verteilergehäuse 1 bzw. an dessen Gehäusedeckeln 4, 5 entsprechende Anschlußöffnungen vorgesehen sein (nicht dargestellt). Eleganter ist die bei den Ausführungsbeispielen vorgesehene Lösung, bei der die Druckräume 24 innerhalb der Verteilervorrichtung mit dem Verteilerraum 3 kommunizieren und von diesem mit Druckmittel versorgt werden. Wie in Figur 1 strichpunktiert angedeutet, geschieht dies beispielsweise dadurch, daß in einem der beiden stirnseitigen Gehäusedeckel 4 zwei Verbindungskanäle 27, 27' ausgebildet sind, die einerseits stirnseitig in den Verteilerraum 3 und andererseits stirnseitig in jeweils einen der Druckräume 24 der Schlauchkörper 26 münden. Es versteht sich, daß derartige Verbindungskanäle 27, 27' auch an anderer Stelle des Verteilergehäuses 1 vorgesehen sein können. Bei einer Ausgestaltung der geschilderten Art erübrigen sich außen am Verteilergehäuse 1 zusätzliche Anschlußöffnungen für die Druckräume 24 der Dichtleisten 7, 8.

Die Dichtleisten 7, 8 sind zweckmäßigerweise unmittelbar in dem Zwischenbereich zwischen den beiden Seitenrändern des Längsschlitzes 2 aufgenommen, so daß sie nicht oder nur geringfügig in den Verteilerraum 3 hineinragen. Es kann sich als zweckmäßig erweisen, an jeder Dichtleiste 7, 8 eine zum Verteilerraum 3 hin vorstehende, sich über die gesamte Länge der jeweiligen Dichtleiste 7, 8 erstreckende Dichtlippe 28, 28' anzuformen, die im geschlossenen Zustand des Schlitzes rückseitig vom Innendruck im Verteilerraum 3 beaufschlagt werden, so daß in Schließstellung eine zusätzliche Dichtkraft erzielt wird. Die Dichtlippen 28, 28' sind beim Ausführungsbeispiel gemäß Figuren 1 bis 4 einstückig an den jeweiligen Schlauchkörper 26, 26' angeformt.

Zur gehäuseseitigen Befestigung einer jeweiligen Dichtleiste 7, 8 ist beim Ausführungsbeispiel gemäß Figuren 1 bis 4 an jeden Schlauchkörper 26 auf der der zugeordneten Dichtleiste 7, 8 diametral gegenüberliegenden Außenseite ein Halteprofil 32 angeformt. Es ist rippenartig erhaben ausgebildet und erstreckt sich insbesondere über die gesamte Länge des jeweiligen Schlauchkörpers 26. Beim Ausführungsbeispiel ist es im Querschnitt schwalbenschwanzartig profiliert. Jedes Halteprofil 32 sitzt in einer komplementären Haltenut 33 ein, die in die den Längsschlitz 2 seitlich begrenzende Partie des Verteilergehäuses eingelassen ist. Die Montage des Halteprofils 32 in der zugeordneten Haltenut 33 erfolgt entweder durch Einknüpfen oder vorzugsweise durch stirnseitiges Einschieben im entfernten Zustand eines Gehäusedeckels 4, 5, da dann die Haltenuten 33 stirnseitig offen liegen. Die axiale Fixierung in einer jeweiligen Haltenut 33 übernehmen zweckmäßigerweise die Gehäusedeckel 4, 5, die die Haltenuten 33 im montierten Zustand stirnseitig abschließen.

Es ist zweckmäßig, einen jeweiligen Schlauchkörper 26, 26' aus derart flexiblem Material herzustellen, das sich bei den in den einzelnen Anwendungsfällen herrschenden Drücken nicht oder nur unwesentlich dehnt. Die beim Verschieben des Spreizkörpers 13 erforderliche Querschnittsveränderung eines jeweiligen Druckraumes 24 wird hierbei im wesentlichen allein durch eine Gestaltänderung des Wandverlaufes eines jeweiligen Schlauchkörpers 26, 26' kompensiert.

Das Verteilergehäuse 1 hat beim Ausführungsbeispiel eine rechteckige und hierbei vorzugsweise eine quadratische Außenkontur. Bevorzugt handelt es sich um ein Strangpreßteil aus Aluminiummaterial. Zur Gewichtseinsparung können zwischen einer den Verteilerraum 3 begrenzenden inneren Gehäusewand 34 und einer die Außenkontur vorgebenden äußeren Gehäusewand 35 mehrere in Längsrichtung durchgehende Hohlräume 36 vorgesehen sein. Die durch die innere Gehäusewand 34 vorgegebene Kontur des Verteilerraums 3 ist zweckmäßigerweise kreisförmig.

Das Abgreifteil 12 ist bei einer derartigen Anordnung zweckmäßigerweise im Bereich lediglich einer der vier Außenflächen 37 gelagert. Daher stehen die übrigen 3 Außenflächen zu Montagezwecken oder dergleichen zur Verfügung. Sie werden vom Abgreifteil 12 in keinster Weise in Anspruch genommen.

Das Abgreifteil 12 selbst ist im Bereich der besagten einen Außenfläche 37 in zwei beidseits des Längsschlitzes 2 vorgesehenen Führungsnuten 38 längsbeweglich gelagert. Die Führungsnuten 38 sind in die Außenfläche 37 des Verteilergehäuses 1 eingelassen und erstrecken sich über die gesamte Gehäuselänge. Am Abgreifteil 12 sind mindestens zwei Führungspartien 43 angeordnet, die in jeweils eine der Führungsnuten 38 längsbeweglich eingreifen. Sie sind im Querschnitt gesehen vorzugsweise hakenähnlich konturiert, so daß sie in einer jeweiligen Führungsnut 38 vorgesehene Führungsflächen 44 hintergreifen, die sie an einer Entnahme quer zur Verlagerungsrichtung 18 hindern. Wird auf das Abgreifteil 12 quer zur Schlitzlängsrichtung und radial nach außen gerichtet ein Zug ausgeübt, so werden die die Führungsflächen 44 hintergreifenden bzw. hinterhakenden Führungspartien 43 gegen besagte, dem Nutgrund zugewandte Führungsflächen 44 gedrückt und an einer weiteren Querbewegung gehindert. Dies gestattet bevorzugt einen Einsatz der Verteilervorrichtung in hängender Anordnung, bei der der Längsschlitz 2 vertikal nach unten weist.

Um die zum Verlagern des Abgreifteils 12 erforderlichen Kräfte so gering wie möglich zu halten, kann es sich empfehlen, im Kontaktbereich zwischen den Führungspartien 43 und den Führungsflächen 44 eine oder mehrere in Figur 4 strichpunktiert angedeutete Führungsrollen 45 vorzusehen. Sie sind zweckmäßigerweise am Abgreifteil 12 drehgelagert, so daß sie bei einer Verlagerung des Abgreifteils 12 an den Führungsflächen 44 abrollen.

Die Druckbeaufschlagung der für das Andrücken der Dichtleisten 7, 8 verantwortlichen Druckräume 24 kann auch so gesteuert werden, daß der Druck zum Verlagern des Abgreifteils 12 kurzzeitig abgesenkt wird, um die Reibungskräfte zu verringern und den Verlagerungsvorgang zu erleichtern.

## Patentansprüche

1. Verteilervorrichtung für Druckluft und/oder sonstige, insbesondere gasförmige Medien, mit einem stirnseitig durch Gehäusedeckel (4, 5) verschlossenen, einen Längsschlitz (2) aufweisenden Verteilergehäuse (1), in dem sich ein das zu verteilende Medium bereitstellender Verteilerraum (3) befindet, mit zwei zur Abdichtung des Verteilerraumes (3) im Bereich des Längsschlitzes (2) dienenden, sich entlang des Längsschlitzes (2) erstreckenden Dichtleisten (7, 8), die sich gegenüberliegend jeweils im Bereich eines der beiden Schlitzränder angeordnet sind und auf deren Rückseite (10) jeweils ein zusätzlich zum Verteilerraum (3) vorgesehener, sich längs der zugeordneten Dichtleiste (7, 8) erstreckender Druckraum (24) angeordnet ist, wobei die Druckräume (24) jeweils von einem von der zugeordneten Dichtleiste (7, 8) gebildeten oder diese Dichtleiste beaufschlagenden querbeweglichen Wandabschnitt (25) begrenzt sind und aus dem Verteilerraum (3) über mit diesem kommunizierende Verbindungskanäle mit fluidischem Druckmittel versorgt werden, so daß die Dichtleisten (7, 8) durch Druckbeaufschlagung gegeneinandergedrückt werden, und mit einem längs des Längsschlitzes (2) bewegbaren Abgreifteil (12), das mit einem zur Übertragung des Mediums dienenden Spreizkörper (13) zwischen die beiden Dichtleisten (7, 8) hineingreift, die dabei lokal auseinandergespreizt werden, dadurch gekennzeichnet, daß die Verbindungskanäle (27, 27') in mindestens einem der stirnseitigen Gehäusedeckel (4, 5) des Verteilergehäuses (1) vorgesehen sind und einerseits stirnseitig in den Verteilerraum (3) und andererseits stirnseitig in jeweils einen der Druckräume (24) münden.

2. Verteilervorrichtung nach Anspruch 1, dadurch gekennzeichnet, daß ein jeweiliger Druckraum (24) in einem am Verteilergehäuse (1) festgelegten Schlauchkörper (26, 26') ausgebildet ist.

3. Verteilervorrichtung nach Anspruch 2, dadurch gekennzeichnet, daß eine jeweilige Dichtleiste (7, 8) unmittelbar von einem Wandabschnitt (25) an einem der Schlauchkörper (26) gebildet ist.

4. Verteilervorrichtung nach Anspruch 2 oder 3, dadurch gekennzeichnet, daß an jedem Schlauchkörper (26, 26') ein sich in Längsrichtung erstreckendes Halteprofil (32) angeformt ist, über das der Schlauchkörper (26, 26') in einer am Verteilergehäuse (1) vorgesehenen Haltenut (33) festgelegt ist.

5. Verteilervorrichtung nach einem der Ansprüche 2 bis 4, dadurch gekennzeichnet, daß die Wand eines jeweiligen Schlauchkörpers (26, 26') aus Material mit gummielastischen Eigenschaften besteht.

6. Verteilervorrichtung nach einem der Ansprüche 1 bis 5, dadurch gekennzeichnet, daß die Dichtleisten (7, 8) zwischen den Schlitzrändern des Verteilergehäuses (1) und vorzugsweise zumindest im wesentlichen radial außerhalb des Verteilerraumes (3) angeordnet sind.

7. Verteilervorrichtung nach einem der Ansprüche 1 bis 6, dadurch gekennzeichnet, daß an jeder Dichtleiste (7, 8) eine zum Verteilerraum (3) hin vorstehende, sich entlang der Dichtleiste (7, 8) erstreckende Dichtlippe (28, 28') angeformt ist.

8. Verteilervorrichtung nach einem der Ansprüche 1 bis 7, dadurch gekennzeichnet, daß das Abgreifteil (12) in zwei gehäuseseitig beidseits des Längsschlitzes (2) vorgesehenen, insbesondere in den Außenumfang des Verteilergehäuses (1) eingelassenen Führungsnuten (38) längsbeweglich gelagert ist.

9. Verteilervorrichtung nach Anspruch 8, dadurch gekennzeichnet, daß das Abgreifteil (12) in die Führungsnuten (38) hineingreifende Führungspartien (43) aufweist, die Führungsflächen (44) der Führungsnuten (38) derart hintergreifen, daß das Abgreifteil (12) vor einem quer zu seiner Verlagerungsrichtung (18) erfolgenden Abheben vom Verteilergehäuse (1) gesichert ist.

10. Verteilervorrichtung nach Anspruch 9, dadurch gekennzeichnet, daß an den Führungspartien (34) Führungsrollen (45) vorgesehen sind, die an den Führungsflächen (44) der Führungsnuten (38) abrollen können.

11. Verteilervorrichtung nach einem der Ansprüche 8 bis 10, dadurch gekennzeichnet, daß das Verteilergehäuse (1) eine rechteckige und insbesondere quadratische Außenkontur hat, wobei das Abgreifteil (12) ausschließlich im Bereich einer der vier Außenflächen (37) gelagert ist und die übrigen drei Außenflächen abgreifteilfrei sind.

## Claims

1. Distributor device for compressed air and/or other in particular gaseous media, with a distributor housing (1) closed at its end face by housing covers (4, 5) and provided with a longitudinal slot (2), in which housing a distributor chamber (3) supplying the medium to be distributed is located, with two sealing strips (7, 8) serving to seal the distributor chamber (3) in the area of the longitudinal slot (2) and extending along the longitudinal slot (2), which are arranged opposite each other in the area of either of the two slot edges and at the rear side (10) of each of which a pressure chamber (24) extending along the associated sealing strip (7, 8) is provided in addition to the distributor chamber (3), each of said pressure chambers (24) being bounded by a wall section (25) capable of lateral movement, which is formed by the associated sealing strip (7, 8) or applies pressure thereto, and being supplied with pressure fluid from the distributor chamber (3) via connecting galleries communicating therewith, so that the sealing strips (7, 8) are pressed against each other by pressurization, and with a tapping part (12) movable along the longitudinal slot (2) and reaching between the two sealing strips (7, 8), thereby locally spreading them apart, with a spreader body (13) serving to transmit the medium, characterized in that the connecting galleries (27, 27') are provided in at least one of the housing covers (4, 5) on the end faces of the distributor housing (1), one end terminating on the face of the distributor chamber (3), while the other end terminates on the face of one of the pressure chambers(24).

2. Distributor device according to claim 1, characterized in that each pressure chamber (24) is formed in a hose body (26, 26') fixed to the distributor housing (1).

3. Distributor device according to claim 2, characterized in that each sealing strip (7, 8) is directly formed by a wall section (25) on one of the hose bodies (26).

4. Distributor device according to claim 2 or 3, characterized in that each hose body (26, 26') is provided with an integral retaining profile (32), by means of which the hose body (26, 26') is located in a retaining groove (33) provided on the distributor housing (1).

5. Distributor device according to any of claims 2 to 4, characterized in that the wall of each hose body (26, 26') consists of a material with rubber-elastic properties.

6. Distributor device according to any of claims 1 to 5, characterized in that the sealing strips (7, 8) are arranged between the slot edges of the distributor housing (1) and preferably at least substantially radially outside the distributor chamber (3).

7. Distributor device according to any of claims 1 to 6, characterized in that each sealing strip (7, 8) is provided with an integral sealing lip (28, 28') projecting towards the distributor chamber (3) and extending along the sealing strip (7, 8).

8. Distributor device according to any of claims 1 to 7, characterized in that the tapping part (12) is mounted for longitudinal movement in two guide grooves (38) provided in the housing on both sides of the longitudinal slot (2), in particular recessed in the external circumference of the distributor housing (1).

9. Distributor device according to claim 8, characterized in that the tapping part (12) is provided with guide sections (43) reaching into the guide grooves (38) and engaging behind the guide surfaces (44) of the guide grooves (38) to secure the tapping part (12) against being lifted off the distributor housing (1) at right angles to its traversing direction (18).

10. Distributor device according to claim 9, characterized in that guide rollers (45) capable of rolling on the guide surfaces (44) of the guide grooves (38) are provided on the guide sections (34).

11. Distributor device according to any of claims 8 to 10, characterized in that the distributor housing (1) has a rectangular and in particular square external shape, the tapping part (12) being exclusively mounted in the area of one of the four external surfaces (37), the remaining three external surfaces being free of tapping parts.

## Revendications

1. Dispositif de distribution d'air comprimé et/ou d'autres fluides en particulier gazeux, comportant un boîtier de distribution (1) fermé frontalement par des couvercles de boîtier (4, 5) et présentant une fente longitudinale (2), dans lequel se trouve une chambre de distribution (3) mettant à disposition le milieu à distribuer, comportant deux baguettes d'étanchéité (7, 8) s'étendant le long de la fente longitudinale (2), servant à rendre étanche la chambre de distribution (3) dans la région de la fente longitudinale (2), lesquelles sont disposées en vis-à-vis chacune dans la région de l'un des deux bords de la fente et sur le côté arrière (10) desquelles est disposée respectivement une chambre de pression (24), prévue en supplément à la chambre de distribution (3), et s'étendant le long de la baguette d'étanchéité (7, 8) correspondante, les chambres de pression (24) étant limitées chacune par une section de paroi (25), mobile transversalement, formée par la baguette d'étanchéité (7, 8) correspondante ou agissant sur cette baguette d'étanchéité, et étant alimentées en fluide sous pression, à partir de la chambre de distribution (3), par des canaux de liaison communiquant avec celle-ci, de sorte que les baguettes d'étanchéité (7, 8) sont pressées l'une contre l'autre par l'action de la pression, et comportant un élément de prise (12) déplaçable le long de la fente longitudinale (2), qui, par un corps d'écartement (13) servant au transfert du fluide, s'engage entre les deux baguettes d'étanchéité (7, 8) lesquelles sont écartées localement l'une de l'autre, caractérisé en ce que les canaux de liaison (27, 27') sont prévus dans au moins l'un des couvercles de boîtier (4, 5) frontaux du boîtier de distribution (1) et débouchent d'une part frontalement dans la chambre de distribution (3) et d'autre part, frontalement, respectivement dans l'une des chambres de pression (24).

2. Dispositif de distribution selon la revendication 1, caractérisé en ce que chaque chambre de pression (24) est formée dans un corps de tuyau (26, 26') fixé sur le boîtier de distribution (1).

3. Dispositif de distribution selon la revendication 2, caractérisé en ce que chaque baguette d'étanchéité (7, 8) est formée directement par une section de paroi (25) de l'un des corps de tuyau (26).

4. Dispositif de distribution selon la revendication 2 ou 3, caractérisé en ce que sur chaque corps de tuyau (26, 26') est formé un profilé de maintien (32) s'étendant dans la direction longitudinale, par lequel le corps de tuyau (26, 26') est fixé dans une rainure de maintien (33) prévue sur le boîtier de distribution (1).

5. Dispositif de distribution selon l'une des revendications 2 à 4, caractérisé en ce que la paroi de chaque corps de tuyau (26, 26') est en matériau présentant les propriétés élastiques du caoutchouc.

6. Dispositif de distribution selon l'une des revendications 1 à 5, caractérisé en ce que les baguettes d'étanchéité (7, 8) sont disposées entre les bords de la fente du boîtier de distribution (1) et de préférence au moins sensiblement radialement à l'extérieur de la chambre de distribution (3).

7. Dispositif de distribution selon l'une des revendications 1 à 6, caractérisé en ce que sur chaque baguette d'étanchéité (7, 8) est formée une lèvre d'étanchéité (28, 28') faisant saillie vers la chambre de distribution (3), et s'étendant le long de la baguette d'étanchéité (7, 8).

8. Dispositif de distribution selon l'une des revendications 1 à 7, caractérisé en ce que l'élément de prise (12) est monté mobile longitudinalement dans deux rainures de guidage (38) prévues côté boîtier des deux côtés de la fente longitudinale (2), inscrites en particulier dans le pourtour extérieur du boîtier de distribution (1).

9. Dispositif de distribution selon la revendication 8, caractérisé en ce que l'élément de prise (12) présente des parties de guidage (43) s'engageant dans les rainures de guidage (38), qui passent derrière des surfaces de guidage (44) des rainures de guidage (38), de manière que l'élément de prise (12) soit bloqué contre un soulèvement par rapport au boîtier de distribution (1), se produisant transversalement à sa direction de déplacement (18).

10. Dispositif de distribution selon la revendication 9, caractérisé en ce que sur les parties de guidage (34) sont prévus des galets de guidage (45), qui peuvent rouler sur les surfaces de guidage (44) des rainures de guidage (38).

11. Dispositif de distribution selon l'une des revendications 8 à 10, caractérisé en ce que le boîtier de distribution (1) présente un contour extérieur rectangulaire et en particulier carré, l'élément de prise (12) étant monté exclusivement dans la région de l'une des quatre faces extérieures (37) et les trois autres faces extérieures ne présentant pas d'élément de prise.
